# EUROPÄISCHE PATENTSCHRIFT

(11) **EP 0 884 236 B1**
(45) Veröffentlichungstag und Bekanntmachung des Hinweises auf die Patenterteilung: **16.04.2003**
(21) Anmeldenummer: 98110040.7
(22) Anmeldetag: 02.06.1998
(51) Int. Cl.: B62H 5/00

(54) **Befestigungsvorrichtung**
Fastening device
Dispositif de montage

(30) Priorität: 12.06.1997 DE 19724912
(43) Veröffentlichungstag der Anmeldung: 16.12.1998
(73) Patentinhaber: ABUS August Bremicker Söhne KG, 58300 Wetter (DE)
(72) Erfinder:
(74) Vertreter: Finsterwald, Martin, Dr.

(56) Entgegenhaltungen:
- EP-A- 0 602 310
- DE-A- 4 304 239
- DE-U- 9 115 003

## Beschreibung

Die Erfindung betrifft eine Befestigungsvorrichtung, mit der insbesondere ein Seilende an einem beweglichen Gegenstand in der Weise angebracht werden kann, daß ein unautorisiertes Lösen des Seilendes vom Gegenstand verhindert wird.

Derartige Befestigungsvorrichtungen werden beispielsweise benötigt, um ein Ende eines Kabelschlosses fest mit einem Zweirad zu verbinden oder um im Baumaschinenbereich zwei bewegliche Gegenstände unlösbar miteinander zu koppeln.

Bekannte Befestigungsvorrichtungen, die in den genannten Bereichen eingesetzt werden können, weisen oftmals den Nachteil komplizierter und zeitaufwendiger Montagearbeiten bei Befestigung des Seilendes am beweglichen Gegenstand auf. Weiterhin wird nicht immer das gewünschte Maß an Sicherheit hinsichtlich eines unautorisierten Lösens des Seilendes vom beweglichen Gegenstand erreicht.

Eine Aufgabe der Erfindung besteht darin, eine Befestigungsvorrichtung der genannten Art derart auszubilden, daß sie einfach und problemlos montierbar ist, wobei insbesondere auch eine höchstmögliche Sicherheit gegen ein unautorisiertes Lösen der Befestigungsvorrichtung nach deren Montage gewährleistet sein soll.

Erfindungsgemäß wird diese Aufgabe gelöst durch eine Befestigungsvorrichtung mit einem Klemmkörper, in welchem ein Seilende befestigbar ist, einer im Klemmkörper vorgesehen Durchgangsöffnung für einen vom Seilende beabstandeten Klemmabschnitt des Seils und einer im Bereich der Durchgangsöffnung in den Klemmkörper einschraubbaren Klemmschraube zur Beaufschlagung des Klemmabschnitts, wobei zwischen Seilende und Klemmabschnitt eine durch Festziehen der Klemmschraube verkürzbare Seilschlaufe ausbildbar ist.

Diese erfindungsgemäße Anordnung ermöglicht eine einfache Montage der Befestigungsvorrichtung beispielsweise an einem Rahmenrohr eines Zweirads:

Das Seil wird mit dem am Rahmenrohr zu befestigenden Ende im voraus durch die Durchgangsöffnung des Klemmkörpers geschoben, in einer Schlaufe um das Rahmenrohr gelegt und anschließend am Klemmkörper beispielsweise mittels einer Schraubverbindung befestigt. In diesem Zustand bilden Klemmkörper und Seilschlaufe eine das Rahmenrohr zwar lose, jedoch vollständig umgebenden Einheit. Anschließend wird am Seil derart gezogen, daß die Seilschlaufe das Rahmenrohr möglichst eng umschließt, woraufhin die Klemmschraube in den Klemmkörper eingeschraubt wird, um auf diese Weise den im Klemmkörper befindlichen Klemmabschnitt des Seils so zu beaufschlagen, daß die das Rahmenrohr umgebende Seilschlaufe verkürzt und um das Rahmenrohr festgezogen wird. Nach Durchführung dieses Vorgangs ist der Klemmkörper fest mit dem Rahmenrohr verbunden.

Für die Herstellung der genannten Verbindung ist es somit lediglich nötig, das Seilende durch die Durchgangsöffnung zu fädeln und anschließend mit dem Klemmkörper zu verbinden, woraufhin nur noch die Klemmschraube festzuziehen ist. Der Montagevorgang gestaltet sich folglich sehr einfach, insbesondere da die Länge des durch die Durchgangsöffnung zu fädelnden Seilabschnitts auf den Abstand zwischen Seilende und Klemmabschnitt des Seils beschränkt ist. Der oftmals deutlich längere Bereich des Seils, welcher auf der dem genannten Seilende abgewandten Seite des Klemmabschnitts an diesen anschließt, muß erfindungsgemäß nicht durch die Durchgangsöffnung gefädelt werden.

Zur Verbindung des durch die Durchgangsöffnung gefädelten Seilendes mit dem Klemmkörper kann das Seilende mit einer ein Innengewinde aufweisenden Anschraubhülse versehen sein. Das Seilende ist in diesem Fall beispielsweise mittels einer Befestigungsschraube, die in die Anschraubhülse einschraubbar ist, im Klemmköper befestigbar.

Um ein unautorisiertes Lösen der Befestigungsschraube und somit ein Aufheben der Verbindung zwischen Seilende und Klemmkörper zuverlässig zu verhindern, kann eine im Klemmkörper vorgesehene Zugangsöffnung für die Befestigungsschraube mittels eines einpreß- oder einschlagbaren Stopfens unzugänglich verschlossen werden, nachdem die Schraubverbindung zwischen Seilende und Klemmkörper hergestellt wurde.

Die Klemmschraube zum Festziehen der Seilschlaufe ist bevorzugt als Madenschraube ausgebildet, die in ihrem festgezogenen Zustand insbesondere vollständig im Klemmkörper aufgenommen ist. Dies ermöglicht eine weitgehend glatte Oberfläche des Klemmkörpers, welche keine störenden Ansätze bzw. Schraubenköpfe aufweist.

Das die Klemmschraube aufnehmende Gewinde erstreckt sich bevorzugt im wesentlichen senkrecht zur im Klemmkörper vorgesehenen Durchgangsöffnung, da auf diese Weise eine besonders effektive Klemmwirkung erzielbar ist. Dabei erstreckt sich das die Klemmschraube aufnehmende Gewinde von der Außenseite des Klemmkörpers bis in die Durchgangsöffnung hinein, so daß die Klemmschraube einerseits von der Außenseite des Klemmkörpers beispielsweise mittels eines Imbusschlüssels zugänglich ist und andererseits eine Beaufschlagung des in der Durchgangsöffnung befindlichen Klemmabschnitts des Seils ermöglicht wird.

Um einen möglichst großen Klemmweg zur Verfügung zu haben bzw. um die Seilschlaufe möglichst stark verkürzen zu können, kann der freie Querschnitt der Durchgangsöffnung des Klemmkörpers zumindest im Bereich der Klemmschraube größer ausgebildet sein als der Seildurchmesser. Bevorzugt beträgt der genannte freie Querschnitt ein Vielfaches des Seildurchmessers in Richtung des die Klemmschraube aufnehmenden Gewindes. So kann die Klemmschraube eine maximale Verschiebung des Klemmabschnitts des Seils und somit eine maximale Verkürzung der Seilschlaufe bewirken.

Das Seil kann beispielsweise wie bei einem handelsüblichen Kabelschloß eine mit Kunststoff ummantelte Metallseele aufweisen. Ebenso ist jedoch auch jede andere stabile Ausführungsform des Seils realisierbar.

Bevorzugt ist im Klemmkörper ein sich in die Durchgangsöffnung hinein erstreckender Klemmsteg vorgesehen, dessen Längsrichtung zumindest im wesentlichen parallel zum die Klemmschraube aufnehmenden Gewinde verläuft. Besonders bevorzugt ist es, wenn zwei derartige Klemmstege einander gegenüberliegend im Innenbereich der Durchgangsöffnung angeordnet sind. Die genannten Klemmstege drücken sich während des Klemmvorgangs bzw. während des Festziehens der Klemmschraube in den äußeren Umfangsbereich des Klemmabschnitts des Seils ein, wodurch während des Klemmvorgangs ein Herausrutschen des Seils aus dem Klemmkörper im Sinne einer ungewollten Vergrößerung der Seilschlaufe verhindert wird. Eine besonders vorteilhafte Wirkung der Klemmstege läßt sich dann erreichen, wenn der Außenbereich des Seils beispielsweise aus einer Kunststoffhülle besteht. In diesem Fall können sich die Klemmstege in die Kunststoffhülle eindrücken. Dabei wird der gegenseitige Abstand von zwei einander gegenüberliegenden Klemmstegen derart gewählt, daß er etwas größer als der Durchmesser der Metallseele des Seils ist.

Alternativ zur Schraubbefestigung des Seilendes im Klemmkörper kann das Seilende auch eine Verdickung aufweisen, insbesondere mit einem Kloben verbunden sein, dessen Durchmesser größer als der Seildurchmesser ist, wobei der Klemmkörper eine Einsteckausnehmung für ein Gabelteil aufweist, dessen Gabelzwischenraum an den Seildurchmesser angepaßt ist. In diesem Fall kann das Seilende in den Klemmkörper eingeschoben werden, bis die Verdickung hinter dem Bereich der Einsteckausnehmung zu liegen kommt, woraufhin das Gabelteil eingeschoben wird und in seinem Gabelzwischenraum einen der Verdickung benachbarten Seilbereich aufnimmt. Das Gabelteil verhindert in dieser Position ein Herausbewegen des Seilendes aus dem Klemmkörper.

Bevorzugt ist es, wenn sich das Gabelteil zumindest im wesentlichen senkrecht zum Seil in seinem der Verdickung benachbarten Bereich erstreckt. Das Gabelteil kann beispielsweise mit Preßsitz in der Einsteckausnehmung gehalten sein, so daß es beispielsweise nach einem Einschlagen in die Einsteckausnehmung nicht mehr oder nur unter Betreiben eines erheblichen Aufwands vom Klemmkörper gelöst werden kann.

Vorteilhaft ist es, wenn der Klemmkörper eine der Seilschlaufe zugewandte Einbuchtung aufweist, welche insbesondere an den Durchmesser eines Rahmenrohrs eines Zweirads angepaßt ist. Auf diese Weise wird erreicht, daß Klemmkörper und Seilschlaufe das Rahmenrohr formschlüssig umgeben, was zu einem besonders guten Halt führt.

Der Klemmkörper kann einen Halteabschnitt für Zweirad-Zubehörteile, wie beispielsweise Schlösser, Trinkflaschen, Kindersitze, Taschen und dgl. aufweisen.

Falls der Halteabschnitt zur Halterung eines Bügel- oder Hangschlosses geeignet sein soll, kann er zwei einander gegenüberliegende Einbuchtungen zur Aufnahme der beiden Bügelschenkel besitzen. So kann ein verschlossenes Bügel- oder Hangschloß in seinem geschlossenen Zustand fest mit dem Halteabschnitt des Klemmkörpers verbunden werden.

Das andere Seilende, welches nicht mit dem Klemmkörper verbunden ist bzw. welches sich nicht innerhalb des Klemmkörpers befindet, kann mit dem Schloßkörper eines Schließmittels, z.B. eines Bügel-, Hang- oder Seilschlosses gekoppelt werden.

In diesem Fall ist es vorteilhaft, wenn dieses andere Seilende eine weitere, ebenfalls ein Innengewinde aufweisende Anschraubhülse aufweist. Wenn dabei eine Bügelöffnung des Schloßkörpers eines Bügelschlosses als Durchgangsbohrung ausgebildet ist, kann die weitere Anschraubhülse und somit das andere Seilende mittels einer in die Durchgangsbohrung bügelseitig einführbaren Schraube mit dem Schloßkörper verbunden werden. Die Schraube wird somit in derselben Richtung in die Bügelöffnung eingeführt, wie der Bügel beim Schließen des Schlosses und das mit dem Schloßkörper auf die genannte Weise gekoppelte Seil tritt aus der als Durchgangsbohrung ausgebildeten Bügelöffnung auf der dem Bügel abgewandten Seite des Schloßkörpers aus diesem aus.

In bestimmten Anwendungsfällen ist es wünschenswert, eine erfindungsgemäße Gesamtanordnung mit einem am anderen Seilende befestigten Bügelschloß so auszubilden, daß der Klemmkörper nach Montage an einem Rahmenrohr eines Zweirads auch wieder von diesem gelöst werden kann. Da die Befestigungsschraube, mit der das eine Seilende im Klemmkörper fest gehalten ist, in der Regel aufgrund des vorstehend bereits erwähnten Stopfens nicht mehr lösbar ist, muß demzufolge zum Lösen des Klemmkörpers vom Zweirad das Seil - nach Lösen der Klemmschraube - über beinahe seine gesamte Länge durch die Durchgangsöffnung des Klemmkörpers gefädelt werden. Um ein vollständiges Durchfädeln auch des anderen Seilendes zu ermöglichen, ist es deshalb sinnvoll, dieses andere Seilende so auszubilden, daß es kleiner ist als der freie Querschnitt der Durchgangsöffnung des Klemmkörpers. Insbesondere sollte in diesem Fall eine eventuell vorgesehene weitere Anschraubhülse am anderen Seilende kleiner als der freie Querschnitt der Durchgangsöffnung sein.

Wenn andererseits in bestimmten Anwendungsfällen verhindert werden soll, daß das andere Seilende durch die Durchgangsöffnung gefädelt werden kann, muß lediglich die Größe des anderen Seilendes bzw. die Größe eines mit diesen anderen Seilende gekoppelten Gegenstands so bemessen sein, daß das Seilende nicht durch die Durchgangsöffnung gefädelt werden kann. In diesem Fall ist ein vollständiges Lösen der Befestigungsvorrichtung nach einer einmal erfolgten Montage nicht mehr möglich, ohne den Klemmkörper oder das Seil zu beschädigen.

Alternativ zur Kopplung mit einem Bügelschloß kann das andere Seilende auch mit einem Seilschloß verbunden sein oder in eine abschließbare Schlaufe übergehen. Dabei ist es von Vorteil, wenn die abschließbare Schlaufe in ihrem Umfang veränderbar ist, so daß je nach Anwendungsfall vom Benutzer die Größe der Schlaufe eingestellt werden kann.

Die Verwendung einer abschließbaren Schlaufe bzw. eines Seilschlosses bedingt den Vorteil, daß im Gegensatz zur Verwendung eines starren Bügels ein flexibles Schließelement zum Einsatz kommt, wobei zusätzlich durch die Einsparung des starren Bügels auch eine Kostenreduzierung möglich wird.

Auch bei Verwendung eines Seilschlosses oder einer abschließbaren Schlaufe kann das entsprechende Seilende so ausgebildet werden, daß das Seil über seine gesamte Länge durch die Durchgangsöffnung des Klemmkörpers gefädelt werden kann.

In einer bevorzugten Ausführungsform ist die abschließbare Schlaufe mittels eines Klemm- und Schließkörpers gebildet, welcher ein Schloß zum Verriegeln des jeweiligen Seilendes sowie eine Klemmvorrichtung für einen vom jeweiligen Ende beabstandeten Bereich des Seils aufweist, wobei die Schlaufe zwischen dem genannten Seilende und dem von ihm beabstandeten Bereich ausgebildet ist.

Besonders bevorzugt ist es, wenn die Klemmvorrichtung so ausgebildet ist, daß das Seil unter Ausnutzung der durch seine Eigenkrümmung bewirkten Kräfte zwischen zumindest drei Lagerpunkten eingeklemmt werden kann. Diese Variante ist von besonderem Vorteil, da der Umfang der abschließbaren Schlaufe in diesem Fall ohne jegliche Werkzeuge allein durch ein Verdrehen und Verschieben des Seils bzw. der Klemmvorrichtung verändert werden kann.

Weitere bevorzugte Ausführungsformen der Erfindung sind in den Unteransprüchen angegeben. Die Erfindung umfaßt alle Kombinationen der Unteransprüche untereinander.

Nachfolgend wird die Erfindung anhand eines Ausführungsbeispiels unter Bezugnahme auf die Zeichnungen beschrieben; in diesen zeigen:
- Fig. 1: eine schematische Ansicht einer erfindungsgemäßen Befestigungsvorrichtung in der Draufsicht,
- Fig. 2: einen Schnitt gemäß der Schnittlinie A-A entsprechend Fig. 1,
- Fig. 3: eine perspektivische Ansicht einer Befestigungsvorrichtung gemäß Fig. 1 mit einem am der Befestigungsvorrichtung abgewandten Ende eines Seils montierten Hangschloß,
- Fig. 4a: eine perspektivische Ansicht einer alternativen Ausführungsform einer erfindungsgemäßen Befestigungsvorrichtung mit einem am der Befestigungsvorrichtung abgewandten Ende eines Seils montierten Seilschloß,
- Fig. 4b,c: eine zu Fig. 4a alternative Klemmvorrichtung zur Fixierung eines Seils, und
- Fig. 5: eine schematische Ansicht einer erfindungsgemäßen Befestigungsvorrichtung gemäß Fig. 4 in der Draufsicht.

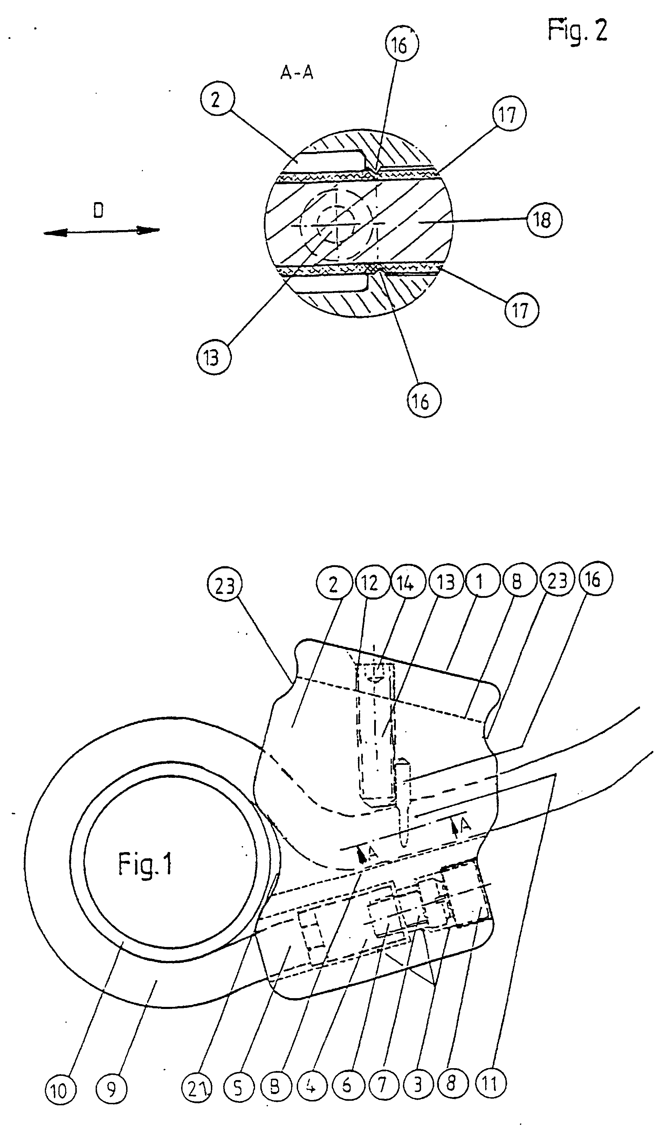

Fig. 1 zeigt einen Klemmkörper 1, welcher in der Draufsicht im wesentlichen eine mit Einbuchtungen versehene Trapezform aufweist.

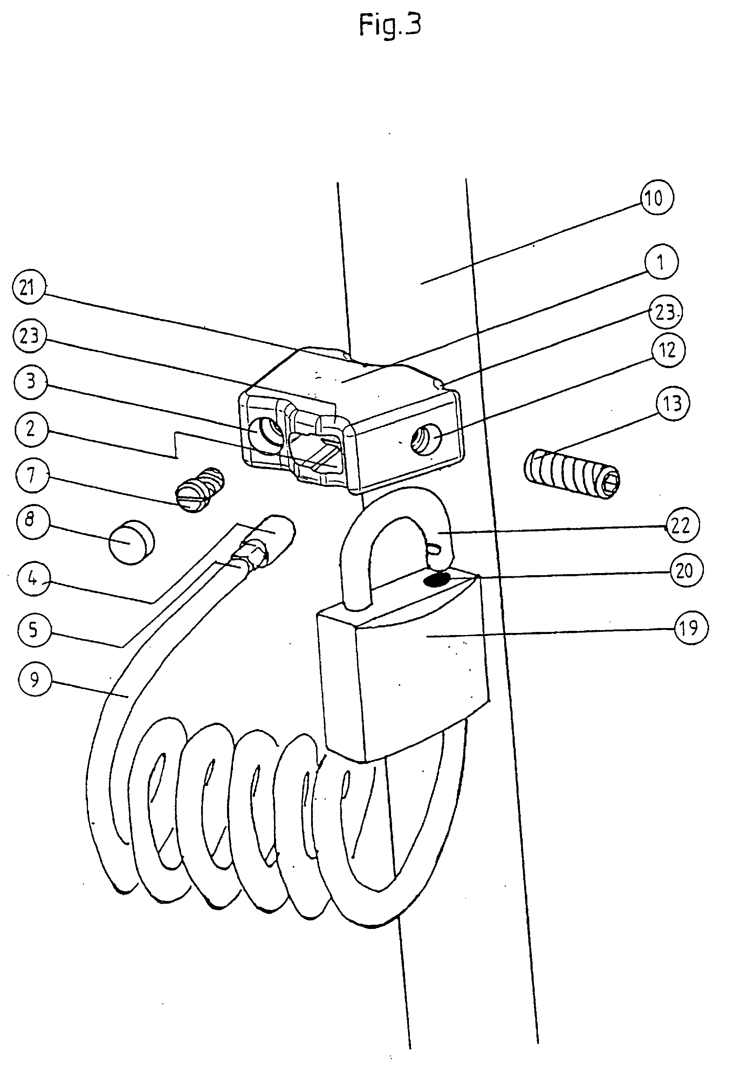

Der Klemmkörper 1 ist mit einer Durchgangsbohrung 2 versehen, die einen im wesentlichen rechteckigen Querschnitt (siehe Fig. 3) aufweist, der sich im Verlauf der Durchgangsöffnung 2 vergrößert bzw. verkleinert, wie dies durch die gestrichelten Linien B gemäß Fig. 1, die die Begrenzung der Durchgangsöffnung 2 kennzeichnen, veranschaulicht ist.

Neben der Durchgangsöffnung 2 ist der Klemmkörper 1 mit einer weiteren Bohrung 3 versehen. Ausgehend von demjenigen Ende des Klemmkörpers 1, an dem die Durchgangsöffnung 2 den größten Querschnitt besitzt, weist die weitere Bohrung 3 in einem ersten Abschnitt einen ersten, größeren Durchmesser, in einem daran anschließenden zweiten Abschnitt einen zweiten, kleineren Durchmesser und anschließend in einem dritten Abschnitt wiederum einen größeren Durchmesser auf, so daß sich letztlich ein stufenförmiger Durchmesserverlauf über die Länge der Bohrung 3 ergibt.

In den ersten Abschnitt der Bohrung 3 ist ein mit einer Anschraubhülse 4 versehenes Seilende 5 eingeführt, wobei der äußere Durchmesser der Anschraubhülse 4 etwas kleiner ist als der Durchmesser der Bohrung 3 im ersten Abschnitt, so daß ein bequemes Einführen der Anschraubhülse 4 in den genannten Abschnitt der Bohrung 3 möglich ist.

An ihrer dem Seilende 5 abgewandten Seite ist die Anschraubhülse 4 mit einem Innengewinde 6 versehen, in das eine Befestigungsschraube 7 einschraubbar ist. Der Durchmesser des Schraubenkopfes der Befestigungsschraube 7 ist größer als der zweite Abschnitt der Bohrung 3, welcher einen gegenüber dem ersten Abschnitt verringerten Durchmesser aufweist. Somit kann durch ein Einschrauben der Befestigungsschraube 7 in die Anschraubhülse 4 eine Fixierung derselben in der Bohrung 3 erfolgen.

Der dritte, wiederum einen größeren Durchmesser aufweisende Abschnitt der Bohrung 3 ist tiefer als die Tiefe des Schraubenkopfes der Befestigungsschraube 7 ausgebildet, so daß oberhalb des genannten Schraubenkopfes noch ausreichend Platz für das Einpressen oder Einschlagen eines Stopfens 8 verbleibt. Der Stopfen 8 ist somit mit Preßsitz im dritten Abschnitt der Bohrung 3 gehalten und verhindert einen Zugang zum Schraubenkopf der in die Anschraubhülse 4 eingeschraubten Befestigungsschraube 7.

Das an dem dem Stopfen 8 abgewandten Ende der Bohrung 3 aus dem Klemmkörper 1 herausragende Seil 9 bildet eine Schlaufe um ein Rahmenrohr 10 eines Zweirads und ist mit seinem an die Schlaufe anschließenden Klemmabschnitt 11 durch die Durchgangsöffnung 2 hindurchgeführt.

Im wesentlichen senkrecht zu einer gedachten Mittellinie C der Durchgangsöffnung 2 erstreckt sich ein Gewinde 12 durch den der Bohrung 3 abgewandten Abschnitt des Klemmkörpers 1. In dieses Gewinde 12 ist eine als Klemmschraube 13 dienende Madenschraube eingeschraubt, die mit ihrem dem Imbus 14 abgewandten Ende 15 den Klemmabschnitt 11 des Seils 9 beaufschlagt bzw. in der Durchgangsöffnung 2 festklemmt.

In der Durchgangsöffnung 2 sind zwei einander gegenüberliegende, sich in die Durchgangsöffnung 2 hineinerstreckende Klemmstege 16 vorgesehen, deren Längsrichtung parallel zu dem die Klemmschraube 13 aufnehmenden Gewinde 12 verläuft. Die Klemmstege 16 sind auf der dem Rahmenrohr 10 abgewandten Seite des Gewindes 12 angeordnet, wobei sich die Erstreckung der Klemmstege 16 auf einen der Bohrung 3 zugewandten Bereich der Durchgangsöffnung 2 beschränkt. In einem der Bohrung 3 abgewandten Bereich der Durchgangsöffnung 2 existiert somit ein klemmstegfreier Bereich.

Fig. 2 zeigt einen Schnitt gemäß der Schnittlinie A-A entsprechend Fig. 1.

Diese Schnittansicht verdeutlicht, daß das Seil 9 eine mit einer Kunststoffummantelung 17 versehene Metallseele 18 aufweist.

Weiterhin ist erkennbar, daß die Innenfläche der Durchgangsöffnung 2 zwei einander gegenüberliegende, sich in die Durchgangsöffnung 2 hineinerstreckende Klemmstege 16 aufweist, welche sich in die Kunststoffummantelung 17 des Seils 9 eindrücken und dieses somit hinsichtlich der in Fig. 2 mit D bezeichneten Bewegungsrichtung hemmen.

Die in Fig. 2 dargestellte Durchgangsöffnung 2 besitzt einen in Richtung der gedachten Verbindungslinie der beiden Klemmstege 16 vergrößerten Querschnitt auf ihrer dem Rahmenrohr 10 zugewandten Seite. Auf der dem Rahmenrohr 10 abgewandten Seite der Klemmstege 16 besitzt die Durchgangsöffnung 2 einen verkleinerten Querschnitt, welcher in Richtung der Verbindungslinie der beiden Klemmstege 16 nur geringfügig größer ist als der Gesamtdurchmesser des Seils 9.

Die in Fig. 2 gestrichelt gezeichnete Klemmschraube 13 verdeutlicht, daß sich die Klemmstege 16 auf der dem Rahmenrohr 10 abgewandten Seite der Klemmschraube 13 befinden.

Die perspektivische Ansicht gemäß Fig. 3 zeigt eine Explosionszeichnung der Anordnung gemäß den Fig. 1 und 2 mit Klemmkörper 1, Rahmenrohr 10, Befestigungsschraube 7, Stopfen 8, Klemmschraube 13 und Seil 9 mit am Seilende 5 angeordneter Anschraubhülse 4.

Das Seil 9 ist als Spiralkabel ausgebildet und ist an seinem anderen, dem Seilende 5 abgewandten Ende mit einem Hangschloß 19 gekoppelt.

Das Hangschloß 19 ist von üblicher Bauart mit dem Unterschied, daß die Bügelöffnung 20 als Durchgangsbohrung ausgebildet ist, so daß von unten in die Durchgangsbohrung das andere Seilende mit einer in Fig. 3 nicht erkennbaren Anschraubhülse eingeführt werden und mittels einer von oben in die Durchgangsbohrung eingeführten Schraube in dieser fixiert werden kann.

Die Anordnung gemäß Fig. 3 wird mit folgenden Arbeitsschritten am Rahmenrohr 10 fixiert:

Das Seilende 5 mit Anschraubhülse 4 wird durch die Durchgangsöffnung 2 des Klemmkörpers 1 in Richtung des Pfeiles E gefädelt und in einer Schlaufe um das Rahmenrohr 10 gelegt. Anschließend wird die Anschraubhülse 4 von hinten in die Bohrung 3 eingeführt, woraufhin sie dort mittels der von vorne in die Bohrung 3 eingeführten Befestigungsschraube 7 fixiert wird. Nach dem Festziehen der Befestigungsschraube 7 ist das Seilende 5 fest mit dem Klemmkörper 1 gekoppelt, woraufhin die Zugangsöffnung für die Klemmschraube 7 mittels des Stopfens 8 verschlossen werden kann.

In diesem Zustand bildet das Seil 9 eine lockere Schlaufe um das Rahmenrohr 10.

Durch Ziehen am Seil in einer zu E entgegengesetzten Richtung wird die genannte Schlaufe enger gezogen, woraufhin die Klemmschraube 13 mittels eines Imbusschlüssels in das Gewinde 12 eingeschraubt wird. Durch das Einschrauben der Klemmschraube 13 wird die um das Rahmenrohr 10 ausgebildete Schlaufe verkürzt und der Klemmkörper 1 fest mit dem Rahmenrohr 10 verbunden. Diese Verbindung wird durch die Einbuchtung 21 des Klemmkörpers 1 begünstigt, welche sich an der der Schlaufe zugewandten Seite des Klemmkörpers 1 befindet. Die Einbuchtung 21 ist an den Durchmesser des Rahmenrohrs 10 angepaßt und bewirkt eine flächige Anlage des Klemmkörpers 1 am Rahmenrohr 10.

Wenn sich das Hangschloß 19 im geschlossenen Zustand befindet, ist die Gesamtanordnung nach der Montage vom Rahmenrohr 10 nicht mehr lösbar, da einerseits die Befestigungsschraube 7 aufgrund des Stopfens 8 nicht mehr zugänglich ist und andererseits das dem Seilende 5 abgewandte Ende des Seils nicht durch die Durchgangsöffnung 2 gefädelt werden kann, da der mit diesem anderen Seilende verbundene Schloßkörper des Hangschlosses 19 dies aufgrund seiner Größe verhindert.

Das Hangschloß 19 kann am Klemmkörper befestigt werden, indem der Bügel 22 des Hangschlosses 19 in die zwei mit 23 bezeichneten Einbuchtungen des Klemmkörpers eingehängt und anschließend das Hangschloß 19 verschlossen wird. Auf diese Weise ist das Hangschloß 19 fest mit dem Klemmkörper 1 verbunden, so daß es bei Benutzung eines das Rahmenrohr 10 aufweisenden Zweirads nicht stört.

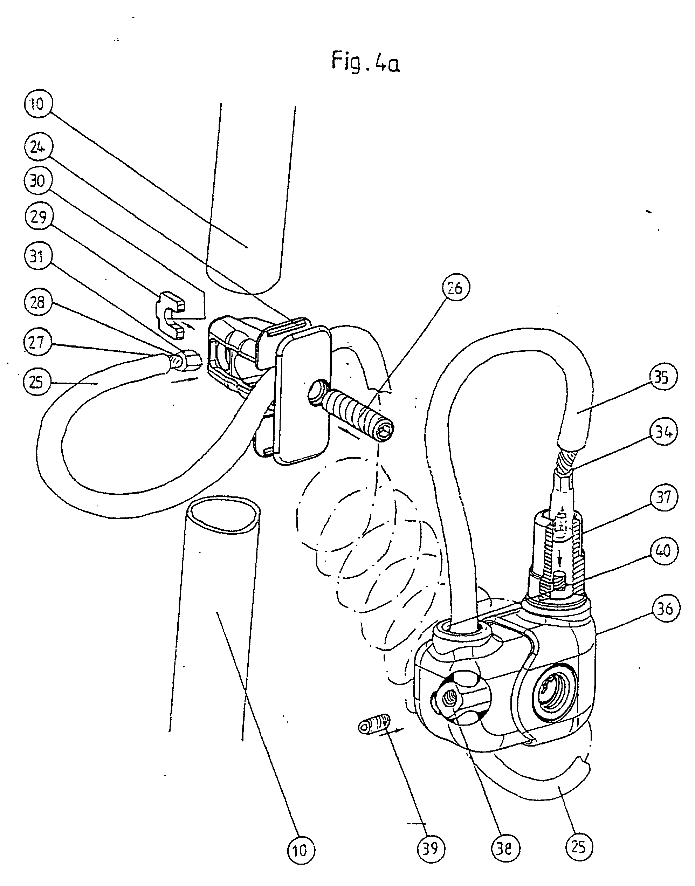

Die perspektivische Ansicht gemäß Fig. 4a zeigt eine erfindungsgemäße Anordnung mit einem Klemmkörper 24, einem Rahmenrohr 10, einem Seil 25 und einer Klemmschraube 26.

Am Seilende 27 ist die Metallseele 28 des Seils 25 nicht mit Kunststoff ummantelt. Der Bereich, in dem keine Ummantelung vorhanden ist, entspricht in seiner Länge der Dicke eines Gabelteils 29, in welchem ein Gabelzwischenraum 30 ausgebildet ist, wobei der Gabelzwischenraum 30 dem Durchmesser der Metallseele 28 entspricht bzw. etwas größer als dieser bemessen ist.

Am Seilende 27 ist eine Verdickung in Form eines Klobens 31 fest mit dem Seil 25 verbunden.

Der Klemmkörper 24 weist eine Öffnung 32 auf, in welche das Seilende 27 mit dem Kloben 31 eingeführt werden kann.

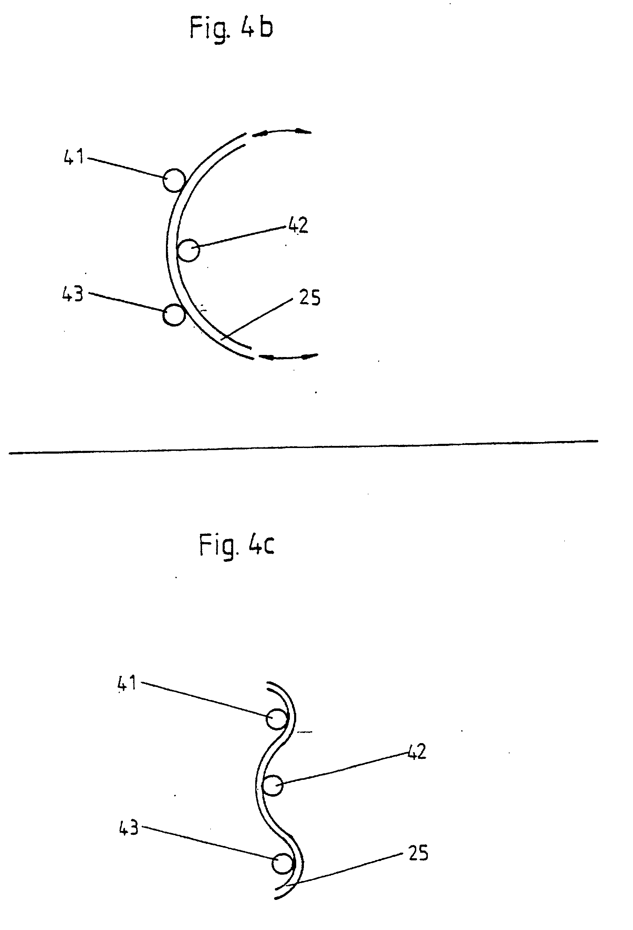

Weiterhin ist der Klemmkörper 24 mit einer in Fig. 4 nicht sichtbaren Einsteckausnehmung versehen, in welche das Gabelteil 29 in Richtung des Pfeiles 2 mit Preßsitz einschlagbar ist.

Zur Befestigung des Seilendes 27 im Klemmkörper 24 wird das Seilende 27 in Richtung des Pfeils 1 in die Öffnung 32 eingeschoben, woraufhin das Gabelteil 29 in die ihm zugeordnete Einsteckausnehmung eingeschlagen wird. Im eingeschlagenen Zustand verhindert das Gabelteil 29 ein Herausbewegen des Klobens 31 aus der Öffnung 32.

Die Befestigung des Klemmkörpers 24 am Rahmenrohr 10 erfolgt dann durch ein Festklemmen des Seils 25 mittels der Klemmschraube 26 analog zu den vorstehend bereits beschriebenen Ausführungsformen.

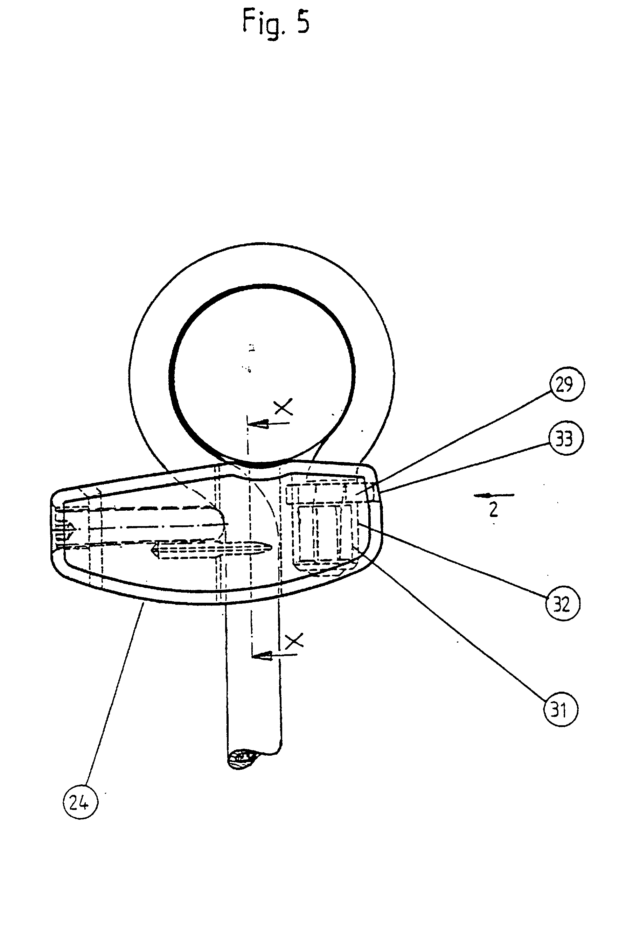

Die Darstellung gemäß Fig. 5 veranschaulicht das Zusammenwirken von Gabelteil 29 und Seilende 27.

In Fig. 5 ist der in die Öffnung 32 eingeschobene Kloben 31 gezeigt, welcher in seiner Bewegung durch das Gabelteil 29 gehemmt ist. Das Gabelteil 29 wurde in die Einsteckausnehmung 33 in Richtung des Pfeils 2 eingeschlagen.

Die anderen, in Fig. 5 dargestellten Teile des Klemmkörpers 24 entsprechen in ihrer Funktion der Ausführungsform gemäß Fig. 1.

Aus Fig. 4a ist ersichtlich, daß das Seilende 34 mit einer abschließbaren Schlaufe 35 verbunden werden kann. Die abschließbare Schlaufe 35 wird dabei mittels eines Klemm- und Schließkörpers 36 gebildet, welcher ein Schloß zum Verriegeln eines Schließklobens 37 aufweist, wobei der Schließkloben 37 mit dem Seilende 34 mittels einer Schraubverbindung koppelbar ist. Diese Schraubverbindung ist im abgeschlossenen Zustand des Klemm- und Schließkörpers 36 von außen nicht zugänglich.

Ferner weist der Klemm- und Schließkörper 36 eine Klemmvorrichtung 38 auf, welche einen vom Seilende 34 beabstandeten Bereich des Bereichs 25 im Klemm- und Schließkörper 36 festklemmen kann. Die Klemmung erfolgt dabei durch das Einschrauben einer Madenschraube 39 in die Klemmvorrichtung 38.

Die abschließbare Schlaufe ist zwischen der Klemmvorrichtung 38 und dem Schließkloben 37 ausgebildet. Sie kann in ihrem Umfang verändert werden, indem die Klemmvorrichtung 38 gelöst wird, und das Seil 25 durch die Durchgangsöffnung 40 des Klemm- und Schließkörpers 36 in die jeweils gewünschte Richtung zur Vergrößerung oder Verkleinerung der Schlaufe geschoben wird. Die in Fig. 4a gezeigte abschließbare Schlaufe kann auch ohne die erfindungsgemäße Befestigungsvorrichtung realisiert werden.

Die Fig. 4b und 4c zeigen schematisch die Funktionsweise einer im Vergleich zu Fig. 4a alternativen Klemmung. Gemäß den Fig. 4b und 4c ist die Klemmvorrichtung 38 mit Madenschraube 39 gemäß Fig. 4a durch drei Lagerpunkte 41, 42, 43 ersetzt, die in Zusammenwirkung mit einer Eigenkrümmung des Seils 25 eine gewünschte Fixierung des Seils 25 in einem Klemm- oder Schließkörper 36, der mit den Lagerpunkten 41 bis 43 ausgestattet ist, bewirken.

Die drei Lagerpunkte 41 bis 43 sind dabei so angeordnet, daß das Seil in der in Fig. 4b dargestellten Orientierung aufgrund seiner Eigenkrümmung problemlos durch die zwischen den Lagerpunkten 41 bis 43 ausgebildeten Zwischenräume gefädelt und in seiner Längsrichtung verschoben werden kann. Durch diese Verschiebung des Seils 25 in seiner Längsrichtung ist der Umfang der Schlaufe 35 (Fig. 4a) einstellbar.

Durch ein relatives Verdrehen des eine Eigenkrümmung aufweisenden Seils 25 und des die Lagerpunkte 41-43 aufweisenden Klemm- oder Schließkörpers um beispielsweise 180° wird gemäß Fig. 4c erreicht, daß das Seil 25 zwischen den Lagerpunkten 41 bis 43 eingeklemmt ist. In dieser Stellung drücken die durch die Eigenkrümmung des Seils 25 bewirkten Rückstellkräfte die Seiloberfläche gegen die Lagerpunkte 41 bis 43, so daß durch die Reibung des Seils 25 an den Lagerpunkten 41 bis 43 ein Verschieben des Seils 25 in seiner Längsrichtung unmöglich oder zumindest stark erschwert wird. Die Oberfläche der Lagerpunkte 41 bis 43 und/oder des Seils 25 können dabei so ausgebildet sein, daß eine erhöhte Reibung auftritt, was ein Verschieben des Seils 25 in seiner Längsrichtung in der in Fig. 4c dargestellten Orientierung zusätzlich erschwert. Zu diesem Zweck kann das Seil 25 beispielsweise eine griffige Kunststoffoberfläche aufweisen und die Lagerpunkte 41 bis 43 können mit einer Riffelung versehen sein.

Der besondere Vorteil der in den Fig. 4b und 4c dargestellten Klemmvorrichtung ist darin zu sehen, daß eine Veränderung des Umfangs der Schlaufe 35 (Fig. 4a) ohne jegliche Werkzeuge lediglich durch ein Verdrehen des Seils 25 oder des Klemm- bzw. Schließkörpers herbeigeführt werden kann.

## Patentansprüche

1. Befestigungsvorrichtung, insbesondere zur Befestigung eines Seilendes (5, 27) an einem Zweirad, mit einem Klemmkörper (1, 24), in welchem ein Seilende (5, 27) befestigbar ist, einer im Klemmkörper (1, 24) vorgesehenen Durchgangsöffnung (2) für einen vom Seilende (5, 27) beabstandeten Klemmabschnitt (11) des Seils (9, 25) und einer im Bereich der Durchgangsöffnung (2) in den Klemmkörper (1, 24) einschraubbaren Klemmschraube (13, 26) zur Beaufschlagung des Klemmabschnitts (11), wobei zwischen Seilende (5, 27) und Klemmabschnitt (11) eine durch Festziehen der Klemmschraube (13, 26) verkürzbare Seilschlaufe ausbildbar ist.

2. Befestigungsvorrichtung nach Anspruch 1, **dadurch gekennzeichnet, daß** das Seilende (5) mit einer ein Innengewinde (6) aufweisenden Anschraubhülse (4) versehen ist, wobei insbesondere das Seilende (5) über dessen Anschraubhülse (4) mittels einer Befestigungsschraube (7) im Klemmkörper (1) befestigbar ist, wobei vorzugsweise eine im Klemmkörper (1) vorgesehene Zugangsöffnung für die Befestigungsschraube (7) mittels eines einpreß- oder einschlagbaren Stopfens (8) unzugänglich verschließbar ist.

3. Befestigungsvorrichtung nach einem der vorhergehenden Ansprüche, **dadurch gekennzeichnet, daß** die Klemmschraube (13, 26) als Madenschraube ausgebildet ist und/oder daß sich das die Klemmschraube (13, 26) aufnehmende Gewinde (12) im wesentlichen senkrecht zur Durchgangsöffnung erstreckt und/oder daß sich das die Klemmschraube (13, 26) aufnehmende Gewinde (12) von der Außenseite des Klemmkörpers (1, 24) bis in die Durchgangsöffnung (2) erstreckt und/oder daß der freie Querschnitt der Durchgangsöffnung (2) zumindest im Bereich der Klemmschraube (13, 26) größer als der Seildurchmesser ist, insbesondere ein Vielfaches des Seildurchmessers beträgt.

4. Befestigungsvorrichtung nach einem der vorhergehenden Ansprüche, **dadurch gekennzeichnet, daß** das Seil eine mit Kunststoff (17) ummantelte Metallseele (18, 28) aufweist und/oder daß zumindest ein, bevorzugt zwei einander gegenüberlieigende, sich in die Durchgangsöffnung (2) hineinerstreckende Klemmstege (16) vorgesehen sind, deren Längsrichtung zumindest im wesentlichen parallel zum die Klemmschraube (13) aufnehmenden Gewinde (12) verläuft, wobei insbesondere der gegenseitige Abstand der beiden einander gegenüberliegenden Klemmstege (16) an den Durchmesser der Metallseele (18) des Seils (9, 25) angepaßt ist.

5. Befestigungsvorrichtung nach einem der vorhergehenden Ansprüche, **dadurch gekennzeichnet, daß** der Klemmkörper (1, 24) eine der Seilschlaufe zugewandte Einbuchtung (21) aufweist, welche insbesondere an den Durchmesser eines Rahmenrohrs (10) eines Zweirads angepaßt ist und/oder daß der Klemmkörper (1, 24) einen Halteabschnitt für Zweirad-Zubehörteile, wie Schlösser (19), Trinkflaschen, Kindersitze, Taschen und dgl. aufweist, wobei insbesondere der Halteabschnitt zwei einander gegenüberliegende Einbuchtungen (23) zur Aufnahme der beiden Schenkel eines Schließmittels, insbesondere eines Bügel-, Hang- oder Seilschlosses (19) aufweist.

6. Befestigungsvorrichtung nach einem der vorhergehenden Ansprüche, **dadurch gekennzeichnet, daß** das Seilende (5) ein Verdickung aufweist, insbesondere mit einem Kloben (31) verbunden ist, dessen Durchmesser größer als der Seildurchmesser ist, wobei der Klemmkörper (24) eine Einsteckausnehmung (33) für ein Gabelteil (29) aufweist, dessen Gabelzwischenraum (30) an den Seildurchmesser angepaßt ist, wobei sich das Gabelteil (29) insbesondere zumindest im wesentlichen senkrecht zum Seil (25) in seinem der Verdickung (31) benachbarten Bereich erstreckt, und/oder wobei das Gabelteil (29) mit Preßsitz in der Einsteckausnehmung (33) gehalten ist.

7. Befestigungsvorrichtung nach einem der vorhergehenden Ansprüche, **dadurch gekennzeichnet, daß** das andere Seilende ebenfalls mit einer Befestigungsvorrichtung gemäß einem der vorhergehenden Ansprüche ausgestattet ist.

8. Befestigungsvorrichtung nach einem der Ansprüche 1 bis 6, **dadurch gekennzeichnet, daß** das andere Seilende mit dem Schloßkörper eines Schließmittels, insbesondere eines Bügelschlosses, eines Hangschlosses (19) oder eines Seilschosses verbunden ist, wobei insbesondere das andere Seilende mit einer weiteren, ebenfalls ein Innengewinde aufweisenden Anschraubhülse versehen ist, und/oder eine Bügelöffnung (20) des Schloßkörpers als Durchgangsbohrung ausgebildet ist.

9. Befestigungsvorrichtung nach Anspruch 8, **dadurch gekennzeichnet, daß** die weitere Anschraubhülse mittels einer in die als Durchgangsbohrung (20) ausgebildete Bügelöffnung bügelseitig einführbaren Schraube mit dem Schloßkörper koppelbar ist, und/oder daß das Seil aus der als Durchgangsbohrung (20) ausgebildeten Bügelöffnung auf der dem Bügel (22) abgewandten Seite des Schloßkörpers austritt, und/oder daß der Durchmesser der weiteren Anschraubhülse kleiner bemessen ist als der freie Querschnitt der Durchgangsöffnung (2) des Klemmkörpers (1).

10. Befestigungsvorrichtung nach einem der Ansprüche 1 bis 6, **dadurch gekennzeichnet, daß** das andere Seilende (34) mit einem Seilschloß verbunden ist oder in eine abschließbaren Schlaufe (35) übergeht, wobei insbesondere die abschließbare Schlaufe (35) in ihrem Umfang veränderbar ist, und/oder die abschließbare Schlaufe (35) mittels eines Klemm- und Schließkörpers (36) gebildet ist, welcher ein Schloß zum Verriegeln des anderen Seilendes (34) sowie eine Klemmvorrichtung (38, 39, 41-43) für einen vom anderen Ende (34) beabstandeten Bereich des Seils (25) aufweist, wobei die Schlaufe (35) zwischen dem anderen Seilende (34) und dem von ihm beabstandeten Bereich ausgebildet ist.

11. Befestigungsvorrichtung nach Anspruch 10, **dadurch gekennzeichnet, daß** das Seil (25) eine Eigenkrümmung besitzt und die Klemmvorrichtung zumindest drei Lagerpunkte (41, 42, 43) aufweist, die derart angeordnet sind, daß das Seil (25) in einer Orientierung relativ zu den Lagerpunkten (41, 42, 43) in seiner Längsrichtung verschiebbar ist und in einer anderen Orientierung relativ zu den Lagerpunkten (41, 42, 43) zwischen den Lagerpunk-ten (41, 42, 43) fixiert ist, wobei insbesondere die beiden unterschiedlichen Orientierungen des Seils (25) durch eine relative Verdrehung zwischen Seil (25) und Lagerpunkten (41, 42, 43) um ungefähr 180° erhältlich sind, und/oder die Lagerpunkte (41, 42, 43) und/oder die Oberfläche des Seils (25) mit einer reibungsvergrößernden Oberfläche versehen sind.

## Claims

1. A fastening apparatus, in particular for the fastening of a cable end (5, 27) to a two-wheeler, having a clamping body (1, 24) in which a cable end (5, 27) can be fastened, a through opening (2) provided in the clamping body (1, 24) for a clamped section (11) of the cable (9, 25) spaced apart from the cable end (5, 27) and a clamping screw (13, 26) which can be screwed into the clamping body (1, 24) in the region of the through opening (2) in order to act on the clamped section (11), with a cable loop being able to be formed between the cable end (5, 27) and the clamped section (11) which can be shortened by tightening the clamping screw (13, 26).

2. A fastening apparatus in accordance with claim 1, **characterised in that** the cable end (5) is provided with a screw-on sleeve (4) having an inner thread (6), in particular with the cable end (5) being able to be fastened via its screw-on sleeve (4) in the clamping body (1) by means of a fastening screw (7), with an access opening for the fastening screw (7) provided in the clamping body (1) preferably being able to be closed in an inaccessible manner by means of a plug (8) which can be pressed in or hammered in.

3. A fastening apparatus in accordance with any one of the preceding claims, **characterised in that** the clamping screw (13, 26) is made as a grub screw; and/or **in that** the thread (12) receiving the clamping screw (13, 26) extends substantially perpendicular to the through opening; and/or **in that** the thread (12) receiving the clamping screw (13, 26) extends from the outside of the clamping body (1, 24) up to and into the through opening (2); and/or **in that** the free cross-section of the through opening (2) is larger than the cable diameter, and, at least in the region of the clamping screw (13, 26), in particular amounts to a multiple of the cable diameter.

4. A fastening apparatus in accordance with any one of the preceding claims, **characterised in that** the cable has a metal core (18, 28) with a plastic (17) jacket; and/or **in that** at least one, preferably two oppositely disposed, clamping webs (16) extending into the through opening (2) are provided whose longitudinal direction extends at least substantially parallel to the thread (12) receiving the clamping screw (13), in particular with the mutual spacing of the two clamping webs (16) oppositely disposed one another being matched to the diameter of the metal core (18) of the cable (9, 25).

5. A fastening apparatus in accordance with any one of the preceding claims, **characterised in that** the clamping body (1, 24) has an indentation (21) which faces the cable loop and which is in particular matched to the diameter of a frame tube (10) of a two-wheeler; and/or **in that** the clamping body (1, 24) has a holding section for two-wheeler accessories such as locks (19), drinking bottles, children's seats, bags and the like, with the holding section in particular having two indentations (23) lying opposite one another for the reception of the two limbs of a lock means, in particular of a hoop lock, of a padlock or of a cable lock (19).

6. A fastening apparatus in accordance with any one of the preceding claims, **characterised in that** the cable end (5) has a thicker section, is in particular connected to a body (31), whose diameter is larger than the cable diameter, with the clamping body (24) having an insertion recess (33) for a fork part (29), whose fork space (30) is matched to the cable diameter, with the fork part (29) extending in particular at least substantially perpendicular to the cable (25) in its region adjacent the thicker section (31); and/or with the fork part (29) being held in the insertion recess (33) by a press fit.

7. A fastening apparatus in accordance with any one of the preceding claims, **characterised in that** the other cable end is likewise fitted with a fastening apparatus in accordance with any one of the preceding claims.

8. A fastening apparatus in accordance with any one of claims 1 to 6, **characterised in that** the other cable end is connected to the lock body of a lock means, in particular of a hoop lock, of a padlock (19) or of a cable lock, with the other cable end in particular being provided with a further screw-on sleeve likewise having an inner thread; and/or with a hoop opening (20) of the lock body being made as a through-bore.

9. A fastening apparatus in accordance with claim 8, **characterised in that** the further screw-on sleeve can be coupled to the lock body by means of a screw which can be inserted at the hoop side into the hoop opening formed as a through-bore (20); and/or **in that** the cable exits the hoop opening formed as a through-bore (20) at the side of the lock body remote from the hoop (22); and/or **in that** the diameter of the further screw-on sleeve has a smaller dimension than the free cross-section of the through opening (2) of the clamping body (1).

10. A fastening apparatus in accordance with any of claims 1 to 6, **characterised in that** the other cable end (34) is connected to a cable lock, or merges into a lockable loop (35), with the lockable loop (35) being in particular changeable in its periphery; and/or with the locking loop (35) being formed by means of a clamping and locking body (36) which has a lock for the locking of the other cable end (34) as well as a clamping apparatus (38, 39, 41-43) for a region of the cable (25) spaced apart from the other end (34), with the loop (35) being formed between the other cable end (34) and the region spaced apart from it.

11. A fastening apparatus in accordance with claim 10, **characterized in that** the cable (25) has an inherent curvature and the clamping apparatus has at least three support points (41, 42, 43) which are arranged such that the cable (25) is displaceable in its longitudinal direction in an orientation relative to the bearing points (41, 42, 43) and is fixed between the bearing points (41, 42, 43) in another orientation relative to the bearing points (41, 42, 43), with the two different orientations of the cable (25) being achievable in particular by a relative rotation between the cable (25) and the bearing points (41, 42, 43) by approximately 180°; and/or with the surface of the cable (25) being provided with a friction increasing surface.

## Revendications

1. Dispositif de fixation, notamment pour la fixation d'une extrémité de câble (5, 27) sur une bicyclette, comportant un corps de serrage (1, 24) dans lequel une extrémité du câble (5, 27) peut être fixée, une ouverture de passage (2) prévue dans le corps de serrage (1, 24) pour un segment de serrage (11) du câble (9,25) distant de l'extrémité du câble (5, 27) et une vis de serrage (13, 26) pouvant être vissée dans la zone de l'ouverture de passage (2) dans le corps de serrage (1, 24) pour solliciter le segment de serrage (11), dans lequel entre l'extrémité du câble (5, 27) et le segment de serrage (11) une boucle du câble pouvant être raccourcie peut être formée par le serrage à fond de la vis de serrage (13, 26).

2. Dispositif de fixation selon la revendication 1 **caractérisé en ce que** l'extrémité du câble (5) est munie d'une douille à visser (4) comportant un filetage intérieur (6), dans lequel notamment l'extrémité du câble (5) peut être vissée dans le corps de serrage (1) par la douille à visser (4) de celle-ci au moyen d'une vis de fixation (7), dans lequel de préférence une ouverture d'accès prévue dans le corps de serrage (1) pour la vis de fixation (7) peut être verrouillée de manière inaccessible au moyen d'un bouchon (8) pouvant être enfoncé ou inséré à force.

3. Dispositif de fixation selon l'une quelconque des revendications précédentes, **caractérisé en ce que** la vis de serrage (13, 26) est conformée en vis sans tête et/ou **en ce que** le filetage (12) recevant la vis de serrage (13, 26) s'étend essentiellement perpendiculairement à l'ouverture de passage et/ou **en ce que** le filetage (12) recevant la vis de serrage (13, 26) s'étend à partir du côté extérieur du corps de serrage (1, 24) jusque dans l'ouverture de passage (2), et/ou **en ce que** la section transversale libre de l'ouverture de passage (2) est supérieure au diamètre du câble au moins dans la zone de la vis de serrage (13, 26), et constitue notamment un multiple du diamètre du câble.

4. Dispositif de fixation selon l'une quelconque des revendications précédentes, **caractérisé en ce que** le câble comprend un noyau métallique (18, 28) enveloppé d'une matière synthétique (17) et/ou **en ce qu'**au moins une, de préférence deux entretoises de serrage (16) se trouvant en vis-à-vis l'une de l'autre et s'étendant dans l'ouverture de passage (2) sont prévues, leur direction longitudinale étant au moins sensiblement parallèle au filetage (12) recevant la vis de serrage (13), dispositif dans lequel l'écartement mutuel des deux entretoises (16) situées en regard l'une de l'autre est adapté au diamètre de la douille métallique (18) du câble (9, 25).

5. Dispositif selon l'une quelconque des revendications précédentes **caractérisé en ce que** le corps de serrage (1, 24) présente une rainure (21) tournée vers la boucle du câble qui est notamment adaptée au diamètre d'un tube de cadre (10) d'une bicyclette, et/ou **en ce que** le corps de serrage (1, 24) comporte un segment d'arrêt pour des pièces accessoires de bicyclette telles que des serrures (19), des bouteilles de boisson, un siège pour enfant, des poches et similaires, dans lequel notamment le segment d'arrêt comprend deux rainures (23) situées en regard l'une de l'autre pour le logement des deux branches d'un moyen de verrouillage, en particulier un étrier de raccordement, un cadenas ou une serrure pour câble (19).

6. Dispositif de fixation selon l'une quelconque des revendications précédentes **caractérisé en ce que** l'extrémité du câble (5) comporte une surépaisseur, notamment est reliée à une cage (31) dont le diamètre est supérieur au diamètre du câble, dans lequel le corps de serrage (24) comprend un logement d'insertion (33) pour une partie de fourche (29) dont l'espace intermédiaire de fourche (30) est adapté au diamètre du câble, dans lequel la partie de fourche (29) s'étend au moins sensiblement perpendiculairement au câble (25) dans sa zone voisine de la surépaisseur (31), et/ou la partie de fourche (29) est maintenue par un siège embouti dans le logement de réception (33).

7. Dispositif de fixation selon l'une quelconque des revendications précédentes **caractérisé en ce que** l'autre extrémité du câble est également équipée d'un dispositif de fixation selon l'une quelconque des revendications précédentes.

8. Dispositif de fixation selon l'une des revendications 1 à 6 **caractérisé en ce que** l'autre extrémité du câble est reliée au corps de serrure d'un moyen de verrouillage notamment un étrier de raccordement, un cadenas (19) ou une serrure pour câble, dans lequel notamment l'autre extrémité du câble est pourvue d'une autre douille à visser présentant également un taraudage, et/ou dans lequel une ouverture d'étrier (20) du corps de serrure est agencée comme perçage de passage.

9. Dispositif de fixation selon la revendication 8, **caractérisé en ce que** l'autre douille à visser peut être accouplée au corps de serrure au moyen d'une vis pouvant être introduite latéralement à l'étrier dans l'ouverture d'étrier agencée comme perçage de passage (20), et/ou **en ce que** le câble sort de l'ouverture d'étrier agencée comme perçage de passage (20) sur le côté du corps de serrure éloigné de l'étrier (22), et/ou le diamètre de l'autre douille à visser est plus petit que la section transversale libre de l'ouverture de passage (2) du corps de serrage (1).

10. Dispositif de fixation selon l'une des revendications 1 à 6 **caractérisé en ce que** l'autre extrémité du câble (34) est reliée à une serrure de câble ou se transforme en une boucle verrouillable (35), dans lequel notamment la boucle verrouillable (35) peut être modifiée dans son pourtour, et/ou **en ce que** la boucle verrouillable (35) est formée par un corps de serrage et de fermeture (36) qui comporte une serrure pour le verrouillage de l'autre extrémité du câble (34) ainsi qu'un dispositif de serrage (38, 39, 41-43) pour une zone du câble (25) distante de l'autre extrémité (35), dans lequel la boucle (35) est agencée entre l'autre extrémité de câble (34) et la zone distante de celle-ci.

11. Dispositif de fixation selon la revendication 10 **caractérisé en ce que** le câble (25) possède une courbure propre et le dispositif de serrage comporte au moins trois points de palier (41, 42, 43) qui sont agencés de façon que le câble (25) puisse coulisser dans sa direction longitudinale dans une orientation relativement aux points de palier (41, 42, 43) et soit fixé entre les points de palier (41, 42, 43) dans une autre orientation relativement aux points de palier (41, 42, 43), dans lequel notamment les deux orientations différentes du câble (25) peuvent être obtenues par une rotation relative d'environ 180° entre le câble (25) et les points de palier (41, 42, 43), et/ou les points de palier (41, 42, 43) et/ou la surface du câble (25) sont pourvus d'une surface accroissant le frottement.
